# EUROPEAN PATENT APPLICATION

(11) **EP 4 545 685 A1**
(43) Date of publication of application: **30.04.2025**
(21) Application number: 23205285.2
(22) Date of filing: 23.10.2023
(51) Int. Cl.: C25B 11/00, B01J 19/00

(54) **A METHOD FOR CONTROLLING ATMOSPHERE OF A REACTION VESSEL, A METHOD FOR PRECIPITATING PARTICLES, AND A SYSTEM FOR CONTROLLING ATMOSPHERE OF A REACTION VESSEL**

(71) Applicant: Umicore Battery Materials Finland Oy, 67900 Kokkola (FI)
(72) Inventor: HASSINEN, Ville, 67900 Kokkola (FI); FRÄNTI, Arto, 67900 Kokkola (FI)
(74) Representative: Umicore RDI Patent Department

(57) **Abstract**

A method for controlling atmosphere of a sealable reaction vessel (60) for precipitating particles comprising one or more of Ni, Co, and Mn, the method comprising: feeding in the reaction vessel (60) a mixture of gases comprising oxygen and inert gas present in a ratio; obtaining exhaust gases from the reaction vessel (60), wherein the oxygen content of the mixture of gases (C1) is different from the oxygen content of the exhaust gases (C2); measuring the oxygen content of the exhaust gases (C2) and providing the measured oxygen content as a first input data (MV1); and adjusting the ratio between the oxygen and inert gas of the mixture of gases based on the first input data (MV1). A method for precipitating particles comprising one or more of Ni, Co, and Mn inside a sealable reaction vessel. A system for controlling atmosphere of a sealable reaction vessel (60) for precipitating particles comprising one or more of Ni, Co, and Mn.

## Description

### Field of the application

The present application relates to a method for controlling atmosphere inside a sealable reaction vessel for precipitating particles. The present application also relates to a method for precipitating particles comprising one or more of Ni, Co, and Mn inside a sealable reaction vessel. The present application also relates to a system for controlling atmosphere inside a sealable reaction vessel for precipitating particles comprising one or more of Ni, Co, and Mn.

### Background

In processes including precipitating particles in a reaction vessel, it is desired to control conditions such as reaction conditions and reaction vessel atmosphere, said atmosphere being present in a space between a reaction vessel lid and a liquid surface inside the reaction vessel. Such processes may include precipitating inorganic elements and/or salts, such as one or more of nickel, cobalt and manganese. Examples of precipitated inorganic elements (reaction products) include transition-metal hydroxides, oxides or oxyhydroxide, which are manufactured via co-precipitation route from a mixture of a metals salt solution and an alkali solution. The transition-metal hydroxides, oxides or oxyhydroxide may be used as precursors for manufacturing cathode active materials for lithium-ion batteries.

Usually, the reaction conditions are controlled by adjusting properties such as pH value during precipitation or controlling the agitation of the mixture. Depending on reaction types, in some cases the reactor atmosphere is kept inert, for example to avoid oxidation. The reactor atmosphere may be, for example, nitrogen-protected by continuously feeding N₂ gas flow into a sealable reaction vessel while expelling exhaust gases from the reaction vessel. In some other cases, air is fed to the reactor/reaction vessel instead of inert gas, for example when materials in the reactor are not or hardly oxidable.

However, in the practical industrial applications, there exist uncontrollable variables such as air leakage into the reactor/reaction vessel, resulting in oxygen or other gases dissolution into the reaction mixture, so that actual reaction conditions are often not exactly corresponding to the predetermined ones . Therefore, there is a need for further improvement in controlling the reaction conditions and especially the atmosphere in the reaction vessel, said atmosphere being present in a space between a reaction vessel lid and a liquid surface inside the reaction vessel.

### Summary

It was found out how to more accurately control the reaction conditions and reaction vessel atmosphere by adjusting ratio of gases fed to the reaction vessel, especially by feeding an amount of oxygen to the reaction vessel based on oxygen content measured in the exhaust gases. With the present method and related device, it was possible to control key reaction conditions, such as reaction vessel atmosphere pressure and oxygen content, and even properties of the reaction products, such as the surface area and impurity level of precipitated inorganic elements, wherein the impurity may originate from reagents. There is no need to control or monitor challenging or uncontrollable variables, such as gases dissolved in the reaction solution. The present methods and devices enable overcoming drawbacks in existing approaches.

In a first aspect, the present disclosure provides a method for controlling atmosphere of a sealable reaction vessel for precipitating particles comprising one or more of Ni, Co, and Mn, the method comprising:
feeding in the reaction vessel a mixture of gases comprising oxygen and inert gas present in a ratio;
obtaining exhaust gases from the reaction vessel, wherein oxygen content of the mixture of gases is different from oxygen content of the exhaust gases;
measuring the oxygen content of the exhaust gases and providing the measured oxygen content as a first input data; and
adjusting the ratio between the oxygen and inert gas of the mixture of gases based on the first input data.

In a second aspect, the present disclosure also provides a method for precipitating particles comprising one or more of Ni, Co, and Mn inside a sealable reaction vessel, the method comprising:
obtaining a desired oxygen content of an exhaust gas from the reaction vessel by controlling atmosphere of the reaction vessel according to the method of the first aspect; and
preparing the particles by coprecipitation in a contacted solution inside the reaction vessel, the contacted solution comprising at least two dissimilar materials of which one material comprise at least one of Ni, Co, and Mn.

In a third aspect, the present disclosure also provides a system for controlling atmosphere of a sealable reaction vessel for precipitating particles comprising one or more of Ni, Co, and Mn, the system comprising:
a gas feeding means for providing inside the reaction vessel a mixture of gases comprising oxygen and inert gas present in a ratio;
a gas evacuation means for evacuating exhaust gas from the reaction vessel;
a detector arranged to measure the oxygen content of the exhaust gas and to provide the measured oxygen content as a first input data;
a controlling means being arranged to adjust the ratio between the oxygen and inert gas of the mixture of gases based on the first input data, such as wherein the controlling means is arranged to carry out the method according to the present disclosure,
preferably the gas feeding means comprising a first feeding means for feeding a first gas comprising oxygen and a second feeding means for feeding the second gas comprising inert gas, wherein the controlling means comprises at least one of a first controlling means and a second controlling means, wherein the first controlling means is arranged to control the flow rate of the first gas and the second controlling means is arranged to control the flow rate of the second gas based on the first input data.

The main embodiments are characterized in the independent claims. Various embodiments are disclosed in the dependent claims. The embodiments and examples recited in the claims and the specification are mutually freely combinable unless otherwise explicitly stated.

With the present method it is possible to exclude effects caused by reaction vessel leakage and/or unknown effects from the reaction due to leakage.

It is also possible to obtain real-time atmosphere controlling in the reaction vessel, said atmosphere being present in a space between a reaction vessel lid and a liquid surface inside the reaction vessel.

Further, it is also possible to vary O₂ concentration in a controllable manner during the precipitation process. This can enable controlling, for example, the microstructure of the precipitated particles.

The present method and system are scalable and can be implemented on an industrial and commercial scale.

### Brief description of the figures

- Figure 1: shows an example of a setup showing a reaction vessel and gas feeding means.
- Figure 2: shows an example of a setup showing a reaction vessel and gas evacuation means.
- Figure 3: shows an example of a setup comprising a reaction vessel, gas feeding means and gas evacuation means.

### Detailed description

In this specification, if any numerical ranges are provided, the ranges include also the upper and lower values. The open term "comprise" also includes a closed term "consisting of" as one option.

It was found out that it is not enough to conduct the precipitation in total inert gas atmosphere, such as in N₂ gas or Ar gas, or in total air atmosphere. Instead, the precipitation needs to be carried in a "sweet spot" operating window and in a certain O₂ content level in reaction vessel atmosphere.

It was especially found out that in a precipitation process the reaction vessel atmosphere plays a significant role and affects the product quality. If the amount of oxygen in precipitation reaction vessel atmosphere can be controlled in a more accurate way, it is possible to adjust, such as reduce, impurity levels the impurity level resulting from the reaction solution, and/or adjust the surface area of precipitated particles. When O₂ level is steady, it also stabilizes product impurity level. This enabled better control over the process compared to prior art systems having no control based on oxygen measurement, but rather controlling the process via product analysis or via monitoring the content or properties of the reaction solution in the reactor.

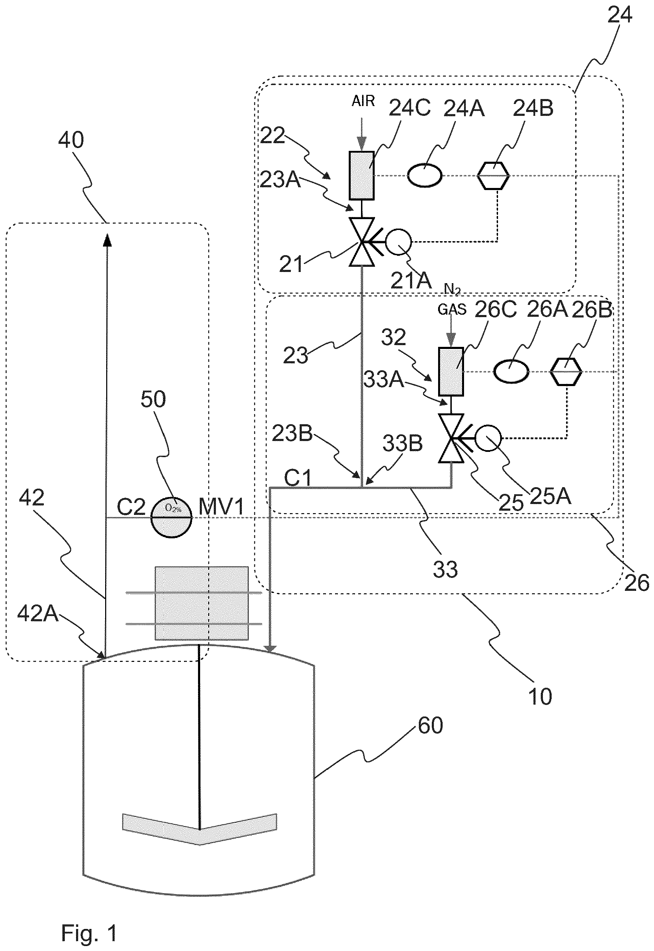

Disclosed is a method for controlling atmosphere of a reaction vessel, such as a sealable or sealed reaction vessel , or a system comprising the reaction vessel, such as shown in the examples of Figures 1-3, for precipitating particles comprising one or more inorganic elements, such as including at least one, *i.e.,* one or more, of Ni, Co, and Mn. Also disclosed is the reaction vessel and the system comprising the reaction vessel. The method, and the related devices and systems, can be implemented on an industrial scale and/or as automated, *i.e.,* as electronically controlled.

"Controlling the atmosphere" may refer to any suitable controlling action aiming to control one or more properties of the atmosphere and/or the content of the atmosphere inside a reaction vessel, and/or to control one or more reactions, wherein atmosphere conditions play a role in the reactions, carried out in the reaction vessel. In one example controlling the atmosphere refers to controlling atmosphere pressure, for example atmosphere pressure in a precipitation reactor/reaction vessel and/or in another reactor/reaction vessel or container in the system. In one example controlling the atmosphere refers to adjusting the type and content of gases fed into a reactor/reaction vessel.

The method may be implemented as a method for controlling gas supply in a process and/or in a reaction vessel and/or system, a method for controlling impurity level in a process of precipitating inorganic salts in a precipitation reaction vessel, a method for controlling atmosphere pressure in a process and/or of a (precipitation) reaction vessel, and/or a method for adjusting surface area of precipitated inorganic salts in a precipitation reaction vessel, wherein the precipitation reaction vessel may be or comprise the sealable reaction vessel 60 for precipitating particles comprising one or more of Ni, Co, and Mn. The term "surface area" as disclosed herein refers to a specific surface area expressed in units of area per mass of sample (m²/g). As appreciated by the skilled person the specific surface area can be measured, for example, with the Brunauer-Emmett-Teller (BET) method, and/or by using a surface area analyzer, for example a Quantachrome Monosorb^{™} analyzer.

A reactor is the core where the actual process takes place. A reaction vessel, or a reactor vessel, is a containing vessel which holds the reactor and may comprise other components, such as temperature controlling means, mixing means, sensors, and the like devices and/or parts. The reactor may define a reactor space or volume or a reaction space or volume, which in configured to receive the reaction solution, reagent and the gases conveyed to the reactor. The reactor space or volume or the reaction space or volume contains reaction solution/dispersion and reaction atmosphere during the process. The reactor or the reactor space may have a total volume and an effective volume, which is smaller than the total volume.

The reaction vessel 60 may comprise or be any suitable reactor, vessel, container, tank or a combination thereof. The reaction vessel is designed and/or configured for precipitating particles, such as inorganic particles. The reaction vessel may be a part of a system, which includes further devices and/or parts. The system may be an automated system, and the system may be controlled, or programmed to be controlled, by one or more controlling means, such as one or more control units. In some applications precipitation is carried out in a slight under pressure, and to avoid gas leaking from the workshop side, the reactor must be a sealable reaction vessel, which means that it can be operated and/or opened and closed in a sealed manner, *i.e.* to obtain an air-proof and/or a gas-tight reaction vessel. Even with a sealed reaction vessel the under pressure may cause minor leaks in the reaction vessel, as the reaction vessel may include a plurality of inlets and outlets and optionally a sealable opening, which are prone to leak. However, with the present method the effects of such leaks can be minimized or eliminated. The reaction vessel may have inlets for the substances disclosed herein, such as for gases, liquids and/or solids, for example for inorganic substances and other agents, and outlets for gases, liquids, and/or solids, such as for exhaust gases, reaction products, condensed liquids, and the like. The reaction vessel may also include apertures for sensors, mixers, and the like devices. For example, the reaction vessel may be equipped with baffles, one or more turbine blades, and/or a concentrator (*i.e*., a mother liquor filtration device) through which mother liquor can be withdrawn from the reaction vessel.

The precipitation of particles may comprise crystallization and/or precipitation of one or more of inorganic substances, such as one or more comprising Ni, Co, and/or Mn, for example comprising one or more elements including at least one of Ni, Co, and Mn, preferably as transition metal hydroxides, oxides or oxyhydroxides for cathode active material. Other agents may be included, such as one or more of doping agents, one or more precipitating chemicals, such as NaOH, and/or one or more complexing agents. For example, in the precipitation such a so-called precursor material for cathode active material may be obtained. The principles of precipitating precursor material for cathode active material for ion batteries, such as lithium-ion batteries, are well known in the art. Alkali solution, such as NaOH, and metal salt solution, such as metal sulphate solution, as reagents, preferably in a presence of a complexing agent, such as an aqueous solution of ammonia (NH_{3(aq)}), are commonly used. A dispersion may be obtained, for example during and/or after the material is precipitated. The reaction solution discussed herein therefore may also refer to a dispersion.

In one example the method is a method for precipitating inorganic precursor particles, such as precursor material for batteries, for example as NMC hydroxides. The batteries may be lithium-ion batteries. Especially cathode material is crucial for the properties of a lithium-ion battery, so it is desired to control the formation of such cathode materials and/or precursors thereof. The present system or device setup may be a system or setup of battery industry, such as a system or setup in a battery material production plant. Accordingly, the present methods may be methods of batter industry, or methods implemented in battery industry.

For example, lithium-containing mixed oxides of nickel, manganese and cobalt may be prepared in a two-stage process. In a first stage, a sparingly soluble salt of the transition metal(s) is prepared by precipitating it from a solution, for example a carbonate or a hydroxide. This sparingly soluble compound may be referred to as a precursor. In a second stage, the precursor is mixed with a lithium compound, for example Li₂CO₃, LiOH or Li₂O, and calcined at high temperatures, for example at 600 to 1100°C. In an example, in a precursor manufacturing process, when performed by (co)precipitation, sulfates of transition metals such as nickel, cobalt and manganese are used as starting materials.

The precursor material as disclosed herein has a composition that can be presented by a general formula: M-Oₓ(OH)₂₋ₓ , wherein 0 ≤ x ≤ 2, and M includes at least one of the Ni, Co and Mn, and possibly at least one other element like an impurity such as Na, S, etc.

In one example nickel, cobalt and manganese are precipitated as a composite hydroxide, oxides or oxyhydroxide. In one example nickel and manganese are precipitated as a composite hydroxide, oxides or oxyhydroxide. After the precipitation the particles may be washed, such as caustic washed, dried, screened and/or packed.

The reaction vessel, or the system, is equipped with at least a gas feeding means, such as gas mixture feeding means, which may comprise a N₂ dozing circuit including a mass flow meter and a control valve, and an air dozing circuit including a mass flow meter and a control valve. The reaction vessel, or the system, may also be equipped with at least two gas feeding means, wherein, for example, one gas feeding means may comprise a N₂ dozing circuit including a mass flow meter and a control valve, and the other gas feeding means may comprise an air dozing circuit including a mass flow meter and a control valve, and the at least two gas feeding means together provide a mixture of gases comprising oxygen and inert gas.

The method may comprise:
feeding in the reaction vessel 60 a mixture of gases comprising first gas, such as oxygen or gas comprising oxygen, and second gas, such as inert gas, present in a ratio *R*;
obtaining exhaust gases from the reaction vessel 60, preferably wherein oxygen content of the mixture of gases C1 is different from oxygen content of the exhaust gases C2;
measuring the oxygen content of the exhaust gases C2 and providing the measured oxygen content as a first input data MV1; and
adjusting the ratio *R* between the oxygen and inert gas of the mixture of gases based on the first input data MV1.

The mixture of gases may comprise at least a first gas and a second gas, and the providing the mixture comprises feeding the first gas via a first feeding means 22 and feeding the second gas via a second feeding means 32, and wherein the first gas comprises more oxygen by volume, such as by volume percentage, than the second gas. The first feeding means 22 may comprise and/or be connected to a first pipeline 23. The second feeding means 32 may comprise and/or be connected to a second pipeline 33. The first feeding means 22 and the second feeding means 32 may comprise other parts, such as one or more or all parts of the corresponding controlling means 24, 26, such as valve 21, 25, and preferably a related actuator 21A, 25A.

The first gas may be, comprise or be obtained from air, which may refer to the atmosphere or atmospheric gas, which usually contains about 21% oxygen by mole fraction. Air may be obtained by collecting and/or compressing ambient air, for example to a container, which may act as a source of first gas, wherefrom it can be controllably provided, such as fed, to the present process. The first gas may have a controlled oxygen content, which is different from ambient air, for example higher, such as oxygen content in the range of 20-50% oxygen by mole fraction.

Preferably the second gas is an oxygen-free gas, which contains substantially no or a minor amount of oxygen. The term "oxygen-free gas" may refer to a gas that comprises 1.0 parts per million of oxygen or less, preferably 0.1 parts per million of oxygen or less. The oxygen-free gas may be maintained at 99.998% purity by volume. The oxygen free gas may be oxygen free nitrogen (OFN). When OFN is used, the rate of change the existing atmosphere (O₂) content can be increased. The desired result, *i.e.* O₂ content, can be achieved if the second gas contains some O₂. When the second gas is oxygen free, the mixing of gases is fast, but if the second gas would contain O₂ the adjusting of the mixture of gases would take longer.

The second gas may be inert gas. The inert gas may be any suitable inert gas or mixture thereof, such as nitrogen (N₂) and/or one or more of a noble gas, for example argon. Gaseous nitrogen has unique properties that make it suitable for inerting industrial processes. While both argon and nitrogen can attain a similar level of inerting, there are differences in their chemical nature that influence the applications in which they are used. "Inerting" as used in this disclosure is not meant to avoid the combustion hazard, but to avoid oxidation reaction to take place in the reaction vessel and/or to control the level of oxidation occurring.

Argon is a denser gas than nitrogen, and an industrial application purged using argon will keep moisture and oxygen out more effectively as a result. Its molecules will disperse less easily than with nitrogen. However, generating an argon inert atmosphere is more expensive than using nitrogen due to the higher cost of argon synthesis.

The second gas may be provided from a source of second gas, which may comprise a container for the gas and/or a gas generator, from which the gas(es) may be fed to the process.

The gases may be provided to the reaction vessel by a gas feeding means 10 for providing inside the reaction vessel 60 a mixture of gases comprising oxygen and inert gas present in a ratio R. The gas feeding means may comprise one or more means for controlling the feeding and/or dosing of the gas, such as a valve, an actuator and/or the like, for example coupled to a gas source, such as connected to one or more gas sources. The gas feeding means may be operatively controlled by a controlling means, and/or may be controlled to feed the gas to a target in a desired amount, with a desired flow rate, with a desired ratio and/or mixture of two or more gases, at a desired time and/or the like manner, for example to obtain a desired gas feed and/or result.

In one embodiment the gas feeding means 10 comprise a first feeding means 22 for feeding a first gas comprising oxygen and a second feeding means 32 for feeding the second gas comprising inert gas, wherein the controlling means comprises at least one of a first controlling means 24 and a second controlling means 26, wherein the first controlling means is arranged to control the flow rate of the first gas and the second controlling means is arranged to control the flow rate of the second gas based on the first input data MV1.

The first feeding means 22 may comprise a first flow measuring means arranged to measure the flow of the first gas through the first feeding means 22 and to provide the measured flow as a second input data MV2 to the first controlling means 24, wherein the first controlling means 24 comprises a first cascade control utilizing the first input data MV1 for controlling a master loop and the second input data MV2 for controlling a slave loop, and/or
the second gas feeding means 32 may comprise a second flow measuring means arranged to measure the flow of the second gas through the second feeding mean 32 and to provide the measured flow as a third input data MV3 to the second controlling means 26, wherein the second controlling means 26 comprises a second cascade control utilizing the first input data MV1 for controlling a master loop and the third input data MV3 for controlling a slave loop.

The flow measuring means, and/or the controlling means, may comprise a mass flow meter 24C, 26C, such as Coriolis flow and density meter, a tube mass flowmeter or a thermal flow meter.

The first feeding means 22 may comprise a first pipeline 23 having a first end 23A, which is arranged to be connected to a first gas source, and a second end 23B, which may be arranged to be connected to the reaction vessel 60, wherein first controlling means 24 locates between the first end 23A and the second end 23B of the first pipeline 23; and/or
the second feeding means 32 may comprise a second pipeline 33 having a first end 33A, which is arranged to be connected to a second gas source, and a second end 33B, which may be arranged to be connected to the reaction vessel 60, wherein second controlling means 26 is located between the first end 33A and the second end 33B of the second pipeline 33. The second ends 23B, 33B of the first and the second pipelines 23, 33 may be connected to another pipeline which is connected to the reaction vessel 60.

The "obtaining" may include converting the gases inside the reaction vessel into exhaust gases, wherein the gases inside the reaction vessel comprises the mixture of gases fed into the reaction vessel and gases generated in the reaction vessel and possible leakage from outside atmosphere into the reaction vessel. The converting may be caused by the reactions carried out in the reaction vessel. The exhaust gas may be evacuated from the reaction vessel 60 by gas evacuation means 40.

The gas evacuation means 40 may comprise a cooling means, which may comprise a heat exchanger 41, arranged to cool the exhaust gas expelled via the gas evacuation mean 40 outside the reaction vessel 60. When the exhaust gas is cooled before the measuring, the measuring in improved. The gas evacuation means 40 may comprise a third pipeline 42.

Gas conducted out from the reaction vessel, *i.e.* exhaust gas, may be cooled and condensed from moisture and/or NH₃ by using the cooling means, such as a cooler. The heat exchanger 41 may be connected in a part of the gas evacuation mean 40 between the reaction vessel 60 and a detector 50. In one example the method comprises separating the condensate from the cooled exhaust gas, and preferably recovering the separated condensate, such as wherein the condensate comprises water and/or NH₃. Removing impurities, such as NH₃, optionally also cooling, facilitates analyzing the O₂.

The method may comprise cooling the exhaust gas by a heat exchanger 41, preferably before the measuring the oxygen content. A condensed fraction of the exhaust gas may be conducted back to the reaction vessel 60.

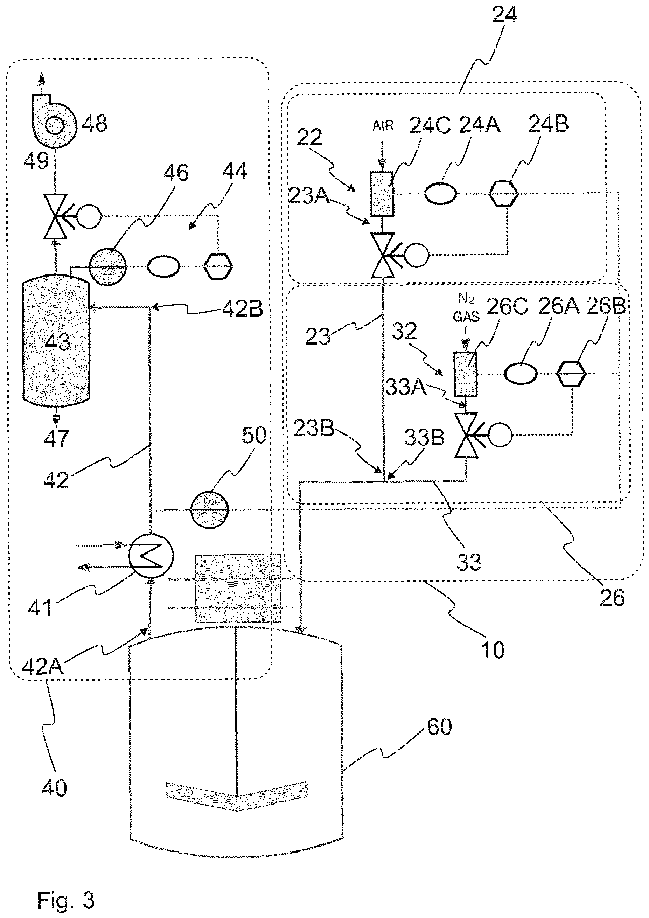

The oxygen content may be measured and/or determined by using any suitable devices and/or methods, such as by a detector 50, more particularly O₂ % detector as shown in Fig. 1 and 3. The detector 50 may be also called as an analyzer. The detector is advantageously arranged to measure the oxygen content, *i.e.* oxygen concentration or percentage, continuously.

Methods to determine an atmosphere, such as O₂ content of the exhaust gas, include for example gas chromatography and thermal conductivity, preferably by using a corresponding device. In examples the oxygen content can be measured/determined by a detector 50, which may be an oxygen analyzer, such as by a *in situ* gas analyzer, by a diode laser spectrophotometer, by a zirconia oxygen analyzer, by an integral oxygen analyzer, and/or by a paramagnetic oxygen analyzer.

The oxygen content of the mixture of gases C1 is different from the oxygen content of the exhaust gases C2, which indicates that reactions occur in the reaction vessel, which have an effect to the oxygen content and/or change the composition of the mixture of gases and produce exhaust gases.

The method may comprise controlling the feeding of mixture of the inert gas and the air in real time as feedback to the measured O₂ percentage of the cooled exhaust gas to maintain the O₂ percentage in the reaction vessel atmosphere gas in a predetermined (target) range to control the reaction vessel atmosphere and/or the other desired parameters and/or features.

Adjusting the ratio between the oxygen and inert gas of the mixture of gases based on the first input data MV1 may be carried out by suitable controlling means, which may be arranged to adjust the ratio between the oxygen and inert gas of the mixture of gases based on the first input data MV1. This may be carried out automatically, preferably in real time, and the controlling means may be comprised in and/or controlled by a control unit, which is operatively connected to gas feeding means 10 for providing inside the reaction vessel 60 a mixture of gases comprising oxygen and inert gas present in a ratio R. The ratio may be a range of ratios.

The system may include a ratio control circuit for controlling the ratio. When using the ratio control circuit, a target value or range is provided to the O2 analyzer. The opening of the control valve changes, and the target value or range of the valve can be determined based on mass measurement of the gas. This can be carried out for the first gas feed or line or for the second gas feed or line, or both. If the target atmosphere is inert or substantially inert, the second gas feed may be run as constant, and the first gas feed is adjusted. If the target atmosphere is regular or ambient atmosphere, the first gas feed may be run constant and the second gas feed is adjusted.

The controlling and the control circuit may be implemented with or without a mass meter for measuring gas. When a mass flow meter is used, the control and/or adjustment is faster and more accurate. The setup may comprise a tube mass flowmeter, which enables better accuracy of the measurement and control/adjustment. This is because the flow provided the control valve is not linear with respect to the opening percentage. When a mass flow meter, especially a tube mass flowmeter, is used, the controllability is more stable, and the control based on the flow information is linear.

The adjusting the ratio *R* may include at least one of the following:
- controlling the flow rate of the first gas through the first feeding means 22 based on the first input data MV1;
- controlling the flow rate of the second gas through the second feeding means 32 based on the first input data MV1;
- controlling the flow rates of the first and the second gases through the first and the second feeding means 22, 32 based on the first input data MV1.

The controlling may comprise adjusting one or more of the flow rates to obtain a desired controlling action, which may include one or more of the effects disclosed herein, such as a desired ratio, content and/or pressure of the reaction vessel atmosphere, a desired level of impurities, a desired surface area of precipitated inorganic salts and/or the like. The controlling or adjusting based on the first input data MV1 may comprise carrying out one or more of the controlling actions as a feed back to the first input data MV1.

The system may be arranged to carry out one or more of the adjusting or controlling actions disclosed herein to maintain one or more parameters in a predetermined range. The actions may be carried out automatically, for example the actions may be controlled and/or determined by a control unit and/or by one or more control means.

The oxygen content may be controlled for example by (1) controlling only the flow rate of the first gas, (2) controlling only the flow rate of the second gas, or (3) controlling both the flow rate of the first gas and the flow rate of the second gas.

In one example, after the cooler (heat exchanger), the detector 50, such as an online O₂% analyzer, which may be supplied with a sample gas cleaning scrubber, measures O₂% of the exhaust gas. O₂ level of the atmosphere of the fed mixture of gases inside the reaction vessel is known, and it can be affected by changing the ratio of the first gas and the second gas. This is possible directly through the operating system by giving O₂% value as a setpoint, and then the operating system adjusts the gas mixture dozing.

The adjusting the ratio *R* may comprise:
- setting a first oxygen set value SV1 of the exhaust gas;
- receiving the first input data MV1;
- determining a first difference of the first oxygen set value SV1 and the first input data MV1, SV1-MV1; and
   a) increasing the flow rate of the first gas when the first difference SV1-MV1 is positive and/or decreasing the flow rate of the first gas when the difference SV1-MV1 is negative, and/or
   b) decreasing the flow rate of the second gas when the first difference SV1-MV1 is positive and/or increasing the flow rate of the second gas when the first difference SV1-MV1 is negative.

The method may comprise:
- measuring the flow rate of the first gas through the first feeding means 22;
- providing the measured flow rate of the first gas as a second input data MV2; and
- regulating the controlling of the flow rate of the first gas by a first cascade control, said first cascade control comprising a master loop and a slave loop,
- wherein the first input data MV1 is utilized for controlling the master loop of and the second input data MV2 is utilized for controlling the slave loop.

A cascade control is a method of control, and it also refers to corresponding controlling means, which may comprise a cascade connection and/or cascade circuits. The cascade control combines two or more controllers/feedback loops, with the output of one controller (the primary controller) adjusting the set-point of a second controller (the secondary controller). The controller driving the set point is called the primary, outer, or master controller. The controller receiving the set point (flow controller in the example) is called the secondary, inner or slave controller. Correspondingly, the master loop may be called as primary loop or outer loop, and the slave loop may be called as secondary loop or inner loop.

A cascade connection is an arrangement of two or more components or circuits such that the output of one is the input to the next. The cascade connection comprises several control variables and one adjustable variable, so the actual variable is adjusted via another variable. The adjustment is accelerated by using, in addition to the primary controller, the secondary controller, which react faster to changes in control. A cascade circuit comprises nested control loops. With the cascade control it is possible to accurately control the flows in the method and in the system.

The method may comprise:
- measuring the flow rate of the second gas through the second feeding means 32;
- providing the measured flow rate of the second gas as a third input data MV3; and
- regulating the controlling of the flow rate of the second gas by a second cascade control, said second cascade control comprising a master loop and a slave loop,
- wherein the first input data MV1 is utilized for controlling the master loop of the second cascade control and wherein the third input data MV3 is utilized for controlling the slave loop of the second cascade control.

The obtaining the exhaust gas may include expelling the exhaust gas from the reaction vessel 60 by a gas evacuation means 40, said expelling comprising:
- suctioning the exhaust gas by a vacuum source 49 which may be connected to the reaction vessel 60 via a third pipeline 42;
- measuring the pressure inside the third pipeline 42 and providing the determined pressure as a fourth input data MV4; and
- controlling the flow rate of the exhaust gas through the third pipeline 42 based on the fourth input data MV4. Th vacuum source 49 may be connected to the reaction vessel via an intermediate container and/or means for controlling the vacuum, such as via an expansion vessel 43. The vacuum source 49 may comprise a vacuum container and/or means for providing a vacuum, such as a vacuum pump or the like, such as an exhaust fan 48.

The controlling the flow rate of the exhaust gas through the third pipeline 42 may comprise:
- receiving a pressure set value SV3 of the exhaust gas;
- determining a third difference of the pressure set value SV3 and the fourth input data MV4, SV3-MV4; and
- increasing the flow rate of the exhaust gas when the third difference SV3-MV4 is positive and decreasing the flow rate of the exhaust gas when the third difference SV3-MV4 is negative.

The method may comprise converting a part of the exhaust gas into the form of a liquid fraction and a gaseous fraction by the cooling of the exhaust gas, and conduiting the liquid fraction separately from the gaseous fraction, optionally wherein the liquid fraction is conducted back to the reaction vessel 60. About 90% of the exhaust gas may liquefy already in the cooler.

One example provides a method for precipitating particles comprising one or more elements including at least one of Ni, Co, and Mn inside a sealable reaction vessel, the method comprising:
- obtaining a desired oxygen content of an exhaust gas from the reaction vessel 60 by controlling atmosphere of the reaction vessel; and
- preparing, or generating, the particles by coprecipitation in a contacted solution inside the reaction vessel 60, the contacted solution comprising at least two dissimilar materials of which one material comprising the one or more elements include at least one of Ni, Co, and Mn. In one example the method for precipitating particles comprises or is a method comprising preparing an aqueous Me(OH)₂ slurry, wherein Me refers to transitional metal(s).

The preparing particles by coprecipitation may comprise supplying and mixing a first aqueous solution comprising a metal salt of the one or more of Ni, Co, and Mn and a second aqueous solution comprising a precipitant (precipitation agent) in the reaction vessel. The precipitant may comprise a hydroxide of one or more selected from a carbonate and a bicarbonate. Preferably the precipitant is hydroxide, such as NaOH.

The method may further comprise supplying and mixing a third aqueous solution comprising a complexing agent in the reaction vessel 60. Preferably the complexing agent is an ammonia-based complexing agent. The complexing agent may comprise or be an organic acid-based complexing agent, such as one or more selected from glycine, tartrate, citrate, and oxalate.

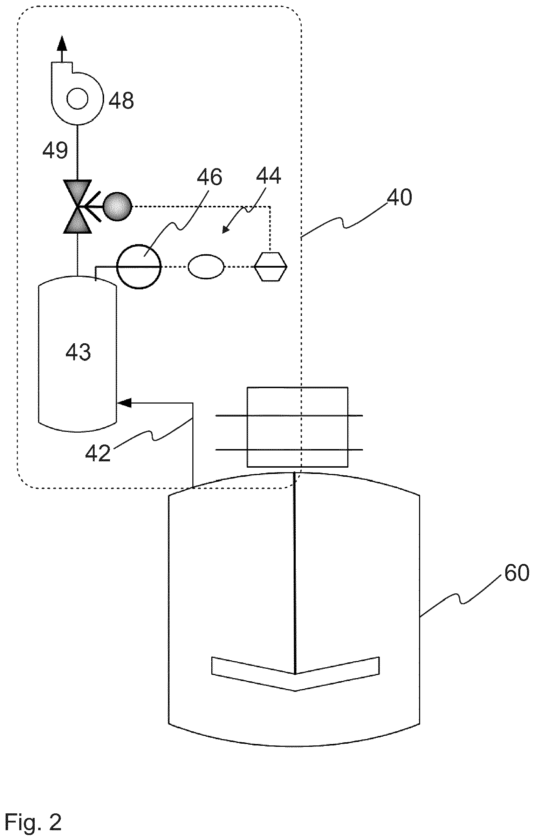

Figure 3 discloses an example of a system for controlling atmosphere of a sealable reaction vessel 60 for precipitating particles comprising one or more of Ni, Co, and Mn. Figures 1 and 2 disclose parts of the exemplary system. The system may comprise:
a gas feeding means 10 for providing inside the reaction vessel 60 a mixture of gases comprising oxygen and inert gas present in a ratio R;
a gas evacuation means 40 for evacuating exhaust gas from the reaction vessel 60;
a detector 50 arranged to measure the oxygen content of the exhaust gas and to provide the measured oxygen content as a first input data MV1;
a controlling means being arranged to adjust the ratio between the oxygen and inert gas of the mixture of gases based on the first input data MV1. The controlling means may be arranged to carry out the method or part thereof.

The controlling means may comprise at least one of a first controlling means 24 and a second controlling means 26.

The first controlling means 24 is arranged for controlling the flow rate of the first gas arranged to flow through the first feeding means 22, wherein the detector 50 is arranged to provide the first input data MV1 to the first controlling means 24, and wherein the first controlling means 24 is arranged to control the flow rate of the first gas based on the first input data MV1.

The first controlling means 24 may comprise a valve 21 and processing means for controlling the opening of the valve, such as a controllable actuator 21A, and/or a flow transmitter (FT) 24A and a flow indicator and controller (FIC) 24B. The second controlling means 26 may comprise a valve 25 and processing means for controlling the opening of the valve, such as a controllable actuator 25A, and/or a flow transmitter (FT) 26A and a flow indicator and controller (FIC) 26B. A flow transmitter 24A, 26A is arranged to transmit the measured flow measurement data to the corresponding controller 24B, 26B, and the controller is arranged to receive the data and control a corresponding valve 21, 25, preferably by operating the corresponding controllable actuator 21A, 25A, as feedback to the received data.

The system may comprise a second controlling means 26 for controlling the flow rate of the second gas arranged to flow through the second feeding means 32, wherein the detector 50 is arranged to provide the first input data MV1 to the second controlling means 26, and wherein the second controlling means 26 is arranged to control the flow rate of the second gas based on the first input data MV1. This provides alternative and/or additional means for controlling the supply of gases, *i.e.* for controlling O₂ gas concentration inside the reaction vessel. The first controlling means 24 and the second controlling means 26 may comprise a mass flow meter 24C, 26C for measuring gas flow. The detector 50 may be arranged to provide data to the first controller 24B and to the second controller 26B. The controlling means or the controllers control the actuators 21A, 25A of the valves 21, 25 to actuate the valve. This affects the flow rate of the first gas and/or the second gas.

The measured values are real values (usually zero is not included). However, in case when the difference is 0, the flow is maintained untouched, *i.e.* the measured value matches perfectly with the set value.

In one embodiment the gas feeding means comprises a first feeding means 22 for feeding a first gas comprising oxygen and a second feeding means 32 for feeding the second gas comprising inert gas, wherein the controlling means comprises at least one of a first controlling means 24 and a second controlling means 26, wherein the first controlling means 24 is arranged to control the flow rate of the first gas and the second controlling means 26 is arranged to control the flow rate of the second gas based on the first input data MV1. The controlling means as used herein may refer to one or more controlling means, which may be independent and/or are arranged to control independently, and/or which may be under a control of another controlling means, such as a higher level and/or master controlling means, system or unit. A master controlling means, system or unit may be connected to other controlling means, such as operatively connected, and/or it may be arranged to monitor the other controlling means. A master controlling means, system or unit may be arranged to control the whole setup.

The first controlling means 24 may be arranged to:
- receive a first oxygen set value SV1;
- determine a first difference of the first oxygen set value SV1 and the first input data MV1, SV1-MV1; and
- increase the flow rate of the first gas when the first difference SV1-MV1 is positive and decrease the flow rate of the first gas when the first difference SV1-MV1 is negative, and preferably maintain the flow rate when the first difference is zero.

The second controlling means 26 may be arranged to:
- receive a second oxygen set value SV2;
- determine a second difference of the oxygen set value (V2 and the first input data MV1, SV2-MV1; and
- decrease the flow rate of the second gas when the second difference SV2-MV1 is positive and increase the flow rate of the second gas when the second difference SV2-MV1 is negative, and preferably maintain the flow rate when the second difference is zero.

Figure 3 shows an embodiment wherein the second ends 23B, 33B of the first 23 and second 33 pipelines are combined to be then connected to the reaction vessel 60.

The gas evacuation means 40 may comprise a third pipeline 42 having a first end 42A, which is arranged to be connected to the reaction vessel 60, and a second end 42B, which may be arranged to be connected to a vacuum source 49,
- wherein the evacuation means 40 further comprises a third controlling means 44 and a second detector 46, such as a pressure meter,
- wherein the second detector 46 is arranged to measure the pressure inside the third pipeline 42 and to provide the measured pressure as a fourth input data MV4 to the third controlling means 44; and
- wherein the third controlling means 44 is arranged to control the flow rate of the exhaust gas through the third pipeline 42 based on the fourth input data MV4.

The third controlling means 44 may be arranged to:
- receive a pressure set value SV3;
- determine a third difference of the pressure set value (SV3) and the fourth input data (MV4), (SV3-MV4); and
- increase the flow rate of the exhaust gas when the third difference (SV3-MV4) is positive and decrease the flow rate of the exhaust gas when the third difference (SV3-MV4) is negative.

The third controlling means 44 may comprise a valve and processing means for controlling the opening of the valve, such as a controllable actuator, and/or a flow transmitter (FT) and a flow indicator and controller, and/or the like means. The second detector 46 may be arranged to measure the pressure inside the third pipeline 42 via an intermediate container, such as expansion vessel 43, and/or to measure the pressure inside the container.

The pressure inside the exhaust gas pipe, *i.e.* third pipeline, is the precipitation pressure (pressure in the reaction vessel). Therefore, reactor pressure can be controlled by controlling the pressure inside the exhaust gas pipe.

The system may comprise an expansion vessel or expansion tank 43, which can provide additional volume for the exhaust gas inside the evacuation means, and therefore works as a buffer to provide adjustability. The expansion vessel 43 can be controlled, for example by operating one or more valves of inlet(s) and/or outlet(s).

The evacuation means 40 may comprise the expansion vessel 43, preferably comprising an outlet 47 for separating a condensed fraction inside the pipeline and conduiting the condensed fraction separately from a gaseous fraction outside the third pipeline 42. The expansion vessel 43 may be a decompression tank, which may be used and/or arranged to adjust the pressure in the reaction vessel 60 to a predetermined (target) range. An outlet, such as gas outlet, from the expansion vessel 43 may be (controllably) connected to a low-pressure exhaust fan 48, which facilitates controlling the pressure in the expansion vessel 43 and also in the system. The reduced pressure in the reaction vessel 60 has an impact to the precipitation reactions and for example to evaporation of ammonia, so providing the expansion vessel 43 in the system helps controlling the conditions in the reaction vessel and/or reaction conditions.

In one example the exhaust gas outlet is connected to a scrubber, the system comprising an exhaust gas pressure control circuit before the scrubber. The exhaust gas pressure control circuit comprising cooling means may be connected to the outlet for the exhaust gas and may be arranged to separate condensed NH₃ and water, and to convey the exhaust gases to a decompression tank to adjust the pressure to a predetermined range.

The system may comprise a pressure control or equalizing circuit arranged to adjust the pressure to the predetermined range. This involves the expansion vessel, scrubber, and control thereof, such as one or more controllable valves controlled by controlling means. This enables lowering the under pressure produced by the scrubber to a desired level. The expansion vessel 43 may comprise an outlet 47for condensed fraction at the bottom. The expansion vessel 43 may comprise a pressure meter for measuring the pressure in the vessel 43, wherein the measured/determined pressure values may be used for controlling the pressure in the vessel by controlling one or more control valves connected to the vessel, so that the pressure in the expansion vessel 43 may be maintained in a target pressure range.

With the pressure control circuit less NH₃ is evaporated, and the precipitation can be carried out at a desired pressure. If there is a leak in the reaction vessel, the effect of the leak, such as leak of ambient air to the reaction vessel, is lower as there is less vacuum in the reaction vessel. Further, with the pressure control circuit it is possible to affect the precipitation reaction by controlling the reduced pressure in the reaction vessel and the washing of exhaust gases. This has no direct impact to the oxygen measurement, and if the amounts of gases fed to the reaction vessel would change, the pressure in the reaction vessel can be maintained in a desired range. It is possible to synchronize different reactions occurring in the system, and control the gas mixtures and pressures, which enables better control especially in industrial and commercial scale.

The system may comprise one or more controlling means, which may comprise one or more control units and/or may be operatively connected to the one or more control units and/or to other means, such as the ones disclosed herein. The controlling means are electronic and may comprise one or more processors and memory, and a user interface, a display, a keyboard, touch screen and/or other inputting means, power connection, a network connection, which may be wired and/or wireless, and/or connections to each of the controllable means of the system as disclosed herein. The controlling means may comprise one or more computers and/or integrated and/or embedded systems. The controlling means may comprise software, which is arranged, when run with the processor, to carry out one or more controlling actions to carry out the present method or part thereof, and optionally one or more other methods, in general the operation of the system. As the means of the system, including any actuators, valves, relays, motors, pumps, heating means, cooling means, sensors, cameras and the like parts, which may be required to monitor and carry out operations, are electronically and/or operatively connected to the control unit, the control unit can be arranged, including programmed, to operate these means. By controlling said means it is possible to obtain and/or maintain the desired operation of the system. A controlling means may be connected, and/or it may be provided with one or more of the other means, such as actuators, valves, actuators arranged to control a valve, a flow transmitter, a flow indicator and controller, and/or the like means and/or other means, for example in the case of the first controlling means, the second controlling means and the third controlling means, which may be further connected to other controlling means, such as master controlling means, and/or which may operate independently. A plurality, such as two or more, separate controlling means in the system may be referred to as "controlling means" in general.

The system and/or the controlling means may be arranged to carry out the method disclosed herein, and/or one or more parts and/or operations of the method. A desired part or operation may comprise for example obtaining and/or maintaining a desired (predetermined) value, such as a target value, more particularly a target value range, such as keeping a variable at the target range by providing one or more controlling actions having effect to the variable, such as gas flow, gas ratio, temperature, flow speed, rotation speed, level of liquid or suspension, pH, concentration of a substance, and the like, and/or inputting and/or outputting a substance, such as liquid, solids and/or gas.

The present disclosure provides use of the system for carrying out one or more of the methods disclosed herein.

### Examples

The present invention is further illustrated with reference to some examples and comparative examples.

### Measurement methods used in the examples

### A) Na and SO₄ analysis

The contents of Na and SO₄ of the obtained cathode active material precursor powders were measured by the Inductively Coupled Plasma - Optical Emission Spectrometry (ICP-OES) method using an Thermo iCAP 6000 Series ICP-OES instrument. The measurement sample was prepared as follows: 0.25 gram of a powder sample of each example and comparative example was dissolved into deionized (DI) water in a 100 ml volumetric flask. The volumetric flask was filled with deionized (DI) water up to the 100 ml mark, followed by complete homogenization. 1 ml of the solution was taken out by a pipette and transferred into a 100 ml volumetric flask for the second dilution. An appropriate amount of a concentrated nitric acid was added by a pipette to achieve 5% HNO₃ solution when brought to volume with deionized water (DI) and then homogenized. Finally, this solution was used for the ICP-OES measurement. The content of SO₄ is expressed as % and of Na as g/t, respectively.

### B) Surface area analysis

The specific surface area (SA) of the example samples was measured with the Bruanauer-Emmett-Teller (BET) method by using a Quantachrome Monosorb. A powder sample was put into the sample tube and heated at 90°C under a nitrogen (N₂) gas for 2 hours prior to the measurement in order to remove adsorbed species. The sample was then de-gassed at room temperature for five minutes. The instrument performed the nitrogen adsorption test at 77 K. By obtaining the nitrogen isothermal absorption/desorption curve, the total specific surface area of the sample in m2/g was derived.

### C) Particle size distribution (PSD) analysis

PSD of the secondary particles was measured using a Malvern Mastersizer 3000 with a Hydro MV wet dispersion unit after dispersing particles of a sample in an aqueous medium. To improve the dispersion of the metal hydroxide powder, sufficient ultrasonic irradiation and stirring was applied, and an appropriate surfactant was introduced. An average particle size D10, D50, and D90 is the value of the particle diameter at 10%, 50% and 90%, respectively, in the cumulative distribution and a span value is a value of (D90-D10)/D50.

### Example 1

A system according to Figures 1, 2 and 3 was built comprising a sealable reaction vessel 60 having a total volume of 250 l and an effective volume of 200 l, equipped with baffles and a six-bladed turbine for mixing, and a concentrator (*i.e*., a mother liquor filtration device) for mother liquor withdrawal from the reaction vessel.

The system comprises a gas feeding means 10 for providing inside the reaction vessel 60 a mixture of gases comprising oxygen and inert gas present in a ratio R; a gas evacuation means 40 for evacuating exhaust gases from the reaction vessel 60, an O₂ percentage analyzer 50 arranged to measure the oxygen content of the exhaust gases and to provide the measured oxygen content as a first input data MV1 to a controlling means 24, 26; and the controlling means arranged to adjust the ratio (*R*) between the oxygen and inert gas of the mixture of gases based on the first input data (MV1), as described hereinabove of the description.

The gas feeding means 10 comprises a first feeding means 22 for feeding a first gas comprising oxygen and a second feeding means 32 for feeding the second gas comprising inert gas, and the controlling means comprises a first controlling means 24 arranged to control the flow rate of the first gas and a second controlling means 26 arranged to control the flow rate of the second gas, both based on the first input data MV1.

The first controlling means 24 comprises a valve 21 and a controllable actuator 21A for controlling the opening of the valve, and a flow transmitter (FT) 24A and a flow indicator and controller (FIC) 24B. The second controlling means 26 comprises a valve 25 and a controllable actuator 25A for controlling the opening of the valve, and a flow transmitter (FT) 26A and a flow indicator and controller (FIC) 26B. The first and the second controlling means 24, 26 comprise a tube mass flow meter 24C, 26C.

A measurement of an oxygen content (C2) from the exhaust gases from the reaction vessel was implemented by using a system setup included, after the reaction vessel 60, a 3-way valve, a precooler, a cooler 41, a filter, a sample pump, a rotameter, after which the gas was conveyed to a O₂ percentage analyzer 50 based on the paramagnetic alternating pressure measuring principle.

The output from the analyzer 50 was used as a first input data (MV1) to the controlling means for adjusting the ratio between the mixture of gases fed to the reactor vessel. The controlling means was programmed to adjust the feeding of the gases as feedback to the first input data (MV1) to obtain a desired flow rates and ratio of gases. The first gas comprising oxygen was air and the second gas comprising inert gas was nitrogen gas. It was experimentally confirmed that with the present controlling setup it was possible efficiently and in real time to control the atmosphere and/or oxygen content inside the reaction vessel and thus affect the formed products and impurity levels.

The used gas evacuation means was equipped with a multistage wet gas scrubber for evacuating the exhaust gases from the reaction vessel and producing the under pressure to the gas evacuation means and inside the reaction vessel.

### Example 2

A similar setup as used in Example 1 was used. However, a measurement of on oxygen content (C2) from the exhaust gases from the reaction vessel was implemented by using a zirconium dioxide cell analyzer 50.

Similar results and observations as in Example 1 were also obtained with this system setup.

### Example 3

A sealable reaction vessel having a total volume of 250 l and an effective volume of 200 l, equipped with baffles and a six-bladed turbine, and a concentrator through which mother liquor can be withdrawn from the reaction vessel, was charged with 150 m³ of water, and heated to 85°C. Then, 1.25 kg of 220 g/l ammonia water and 24 l of 120 g/l seed slurry of Ni(OH)₂ particles having D50 of 1.5 µm were added, and the pH of such obtained starting solution was adjusted with 230 g/l NaOH(aq) to the value of 11.4 (measured at a temperature of 20°C). Nitrogen gas was supplied through the vessel at 250 l/h and air at 25 l/h, respectively, thereby to obtain and maintain an atmosphere inside the reaction vessel at an O₂ content of 2.0 vol.%. Inside the reaction vessel the pressure was kept at -24.6 mbar, while the pressure inside the gas evacuation means the pressure of the exhaust gas was kept at - 30.0 mbar.

Next, while the reaction solution was maintained at 85°C and stirred at a power density of 11 kW/m³, 120 g/l metal sulfate solution comprising Ni, Mn, and Co (in a stoichiometric molar ratio, Ni:Mn:Co of 90:5:5), 220 g/l ammonia water, and 230 g/l NaOH solution were continuously added. A feed rate of the metal sulfate solution was 11 l/h for the first two hours and then 25 l/h for the rest of the precipitation process. The feed rates of the ammonia water and the NaOH were such that the pH (measured at a temperature of 20°C) and the ammonium ion concentration were controlled to pH 11.2 to 11.6 and 3 to 4 g/l, respectively. The process was stopped when the D50 of the reactor sample reached approximately the target value of 5.0 µm.

The obtained slurry was filtered and caustic washed, followed by a drying step to obtain a cathode active material precursor, i.e. a precursor material. The physiochemical analysis of the obtained cathode active material precursor, including the measurements of D50 particle size, surface area, and Na and SO₄ impurity levels were conducted as described below and the results are given in Table 1.

### Comparative Example 1

A cathode active material precursor was prepared and analyzed according to the same procedures as described in Example 3, except that the atmosphere inside the reaction vessel was kept fully inert by supplying only nitrogen gas at 250 l/h.

### Example 4

A sealable reaction vessel having a total volume of 250 l and an effective volume of 200 l, equipped with baffles and a six-bladed turbine, and a concentrator through which mother liquor can be withdrawn from the reaction vessel, was charged with 160 l of water, and heated to 65°C. Then, 6kg of 220 g/l ammonia water was added, and the pH of such obtained starting solution was adjusted with 230 g/l NaOH(aq) to the value of 12.4 (measured at a temperature of 20°C). Nitrogen gas was supplied through the vessel at 175 l/h and air at 22.5 l/h, respectively, thereby to obtain and maintain an atmosphere inside the reaction vessel at an O₂ content of 2.5 vol.%. Inside the reaction vessel the pressure was kept at -24.6 mbar, while the pressure inside the gas evacuation mans the pressure of the exhaust gas was kept at - 30.0 mbar.

Next, while the reaction solution was maintained at 65°C and stirred at a power density of 3 kW/m³, 120 g/l metal sulfate solution comprising Ni, Mn, and Co (in a stoichiometric molar ratio, Ni:Mn:Co of 65:20:15), 220 g/l ammonia water, and 230 g/l NaOH solution were continuously added. A feed rate of the metal sulfate solution was 12 l/h for the first two hours and then 25 l/h for the rest of the precipitation process. The feed rates of the ammonia water and the NaOH were such that the pH (measured at a temperature of 20°C) and the ammonium ion concentration were controlled to pH 11.2 to 11.9 and 7 to 10 g/l, respectively. The process was stopped when the D50 of the reactor sample reached approximately the target value of 10.0 µm.

The obtained slurry was filtered and caustic washed, followed by a drying step to obtain a cathode active material precursor. The physiochemical analysis of the obtained cathode active material precursor, including the measurements of D50 particle size, surface area, and Na and SO₄ impurity levels were conducted as described below and the results are given in Table 1.

### Comparative Example 2

A cathode active material precursor was prepared and analyzed according to the same procedures as described in Example 4, except that the atmosphere inside the reaction vessel was kept fully inert by supplying only nitrogen gas at 175 l/h.

**Table 1. Physiochemical analysis results of Ex3-4 and CEx1-2**

| Section | D50 (µm) | Span | Na (g/t) | SO₄ (%) | SSA (m²/g) |
|---|---|---|---|---|---|
| Ex3 | 4.6 | 0.50 | 85 | 0.22 | 13.1 |
| CEx1 | 4.7 | 0.35 | 250 | 0.52 | 9.5 |
| Ex4 | 10.0 | 0.45 | 150 | 0.35 | 5.0 |
| CEx2 | 9.9 | 0.35 | 250 | 0.50 | 3.0 |

## Claims

1. A method for controlling atmosphere of a sealable reaction vessel (60) for precipitating particles comprising one or more of Ni, Co, and Mn, the method comprising:
feeding in the reaction vessel (60) a mixture of gases comprising oxygen and inert gas present in a ratio (*R*);
obtaining exhaust gases from the reaction vessel (60), wherein oxygen content of the mixture of gases (C1) is different from oxygen content of the exhaust gases (C2);
measuring the oxygen content of the exhaust gases (C2) and providing the measured oxygen content as a first input data (MV1); and
adjusting the ratio (*R*) between the oxygen and inert gas of the mixture of gases based on the first input data (MV1).

2. The method of claim 1, wherein the mixture of gases comprises a first gas and a second gas, and the providing the mixture comprises feeding the first gas via a first feeding means (22) and feeding the second gas via a second feeding means (32), and wherein the first gas comprises more oxygen by volume than the second gas, preferably the second gas is an oxygen-free gas.

3. The method of claim 2, wherein the adjusting the ratio (*R*) includes at least one of the following:
- controlling the flow rate of the first gas through the first feeding means (22) based on the first input data (MV1);
- controlling the flow rate of the second gas through the second feeding means (32) based on the first input data (MV1);
- controlling the flow rates of the first and the second gases through the first and the second feeding means (22, 32) based on the first input data (MV1).

4. The method of any of claims 1-3, wherein the method comprises cooling, preferably before the measuring the oxygen content, the exhaust gas by a heat exchanger (41), optionally a condensed fraction of the exhaust gas is conducted back to the reaction vessel (60).

5. The method of any of claims 1-4, wherein the adjusting the ratio (*R*) comprising:
setting a first oxygen set value (SV1) of the exhaust gas;
receiving the first input data (MV1);
determining a first difference of the first oxygen set value (SV1) and the first input data (MV1), (SV1-MV1); and
a) increasing the flow rate of the first gas when the first difference (SV1-MV1) is positive and decreasing the flow rate of the first gas when the difference (SV1-MV1) is negative,
b) decreasing the flow rate of the second gas when the first difference (SV1-MV1) is positive and increasing the flow rate of the second gas when the first difference (SV1-MV1) is negative.

6. The method of any of claims 2-5, wherein the method comprising:
measuring the flow rate of the first gas through the first feeding means (22);
providing the measured flow rate of the first gas as a second input data (MV2); and
regulating the controlling of the flow rate of the first gas by a first cascade control, said first cascade control comprising a master loop and a slave loop,
wherein the first input data (MV1) is utilized for controlling the master loop of and the second input data (MV2) is utilized for controlling the slave loop.

7. The method of any of claims 2-6, wherein the method comprising:
measuring the flow rate of the second gas through the second feeding means (32);
providing the measured flow rate of the second gas as a third input data (MV3); and
regulating the controlling of the flow rate of the second gas by a second cascade control, said second cascade control comprising a master loop and a slave loop,
wherein the first input data (MV1) is utilized for controlling the master loop of the second cascade control and wherein the third input data (MV3) is utilized for controlling the slave loop of the second cascade control.

8. The method of any of claims 1-7, wherein the obtaining the exhaust gas includes expelling the exhaust gas from the reaction vessel (60) by a gas evacuation means (40), said expelling comprising:
suctioning the exhaust gas by a vacuum source (49) connected to the reaction vessel (60) via a third pipeline (42);
measuring the pressure inside the third pipeline (42) and providing the determined pressure as a fourth input data (MV4); and
controlling the flow rate of the exhaust gas through the third pipeline (42) based on the fourth input data (MV4).

9. The method of claim 8, wherein the controlling the flow rate of the exhaust gas through the third pipeline (42) comprises:
receiving a pressure set value (SV3) of the exhaust gas;
determining a third difference of the pressure set value (SV3) and the fourth input data (MV4), (SV3-MV4); and
increasing the flow rate of the exhaust gas when the third difference (SV3-MV4) is positive and decreasing the flow rate of the exhaust gas when the third difference (SV3-MV4) is negative.

10. The method of any of claims 1-9, wherein the method comprises converting a part of the exhaust gas into the form of a liquid fraction and a gaseous fraction by the cooling the exhaust gas, and conduiting the liquid fraction separately from the gaseous fraction, optionally wherein the liquid fraction is conducted back to the reaction vessel (60).

11. A method for precipitating particles comprising one or more of Ni, Co, and Mn inside a sealable reaction vessel, the method comprising:
obtaining a desired oxygen content of an exhaust gas from the reaction vessel (60) by controlling atmosphere of the reaction vessel with the method of any of claims 0-0; and
preparing the particles by coprecipitation in a contacted solution inside the reaction vessel (60), the contacted solution comprising at least two dissimilar materials of which one material comprise the one or more of Ni, Co, and Mn.

12. The method of claim 11, wherein the preparing particles by coprecipitation comprises supplying and mixing a first aqueous solution comprising a metal salt of the one or more of Ni, Co, and Mn and a second aqueous solution comprising a precipitant in the reaction vessel.

13. The method of claim 12, wherein the precipitant comprises a hydroxide or at least one selected from a carbonate and a bicarbonate, preferably wherein the precipitant is hydroxide.

14. The method of any of claims 11-13, wherein the method further comprising supplying and mixing a third aqueous solution comprising a complexing agent in the reaction vessel (60), preferably wherein the complexing agent is an ammonia-based complexing agent.

15. A system for controlling atmosphere of a sealable reaction vessel (60) for precipitating particles comprising one or more of Ni, Co, and Mn, the system comprising:
a gas feeding means (10) for providing inside the reaction vessel (60) a mixture of gases comprising oxygen and inert gas present in a ratio (*R*);
a gas evacuation means (40) for evacuating exhaust gas from the reaction vessel (60);
a detector (50) arranged to measure the oxygen content of the exhaust gas and to provide the measured oxygen content as a first input data (MV1);
a controlling means being arranged to adjust the ratio (*R*) between the oxygen and inert gas of the mixture of gases based on the first input data (MV1), such as wherein the controlling means is arranged to carry out the method of any of the preceding claims,
preferably the gas feeding means (10) comprising a first feeding means (22) for feeding a first gas comprising oxygen and a second feeding means (32) for feeding the second gas comprising inert gas, wherein the controlling means comprises at least one of a first controlling means (24) and a second controlling means (26), wherein the first controlling means is arranged to control the flow rate of the first gas and the second controlling means is arranged to control the flow rate of the second gas based on the first input data (MV1).
